# EUROPEAN PATENT APPLICATION

(11) **EP 4 207 455 A1**
(43) Date of publication of application: **05.07.2023**
(21) Application number: 22774274.9
(22) Date of filing: 23.03.2022
(51) Int. Cl.: H01M 50/244, H01M 50/502

(54) **BATTERY PACK AND POWER CONSUMING DEVICE**

(30) Priority: 24.03.2021 CN 202120604362 U
(71) Applicant: DONGGUAN POWERAMP TECHNOLOGY LIMITED, Dongguan, Guangdong 523000 (CN)
(72) Inventor: YUAN, Hongwei, Dongguan, Guangdong 523000 (CN); TONG, Yanchen, Dongguan, Guangdong 523000 (CN)
(74) Representative: Icosa
(86) International application number: PCT/CN2022/082506
(87) International publication number: WO 2022/199618

(57) **Abstract**

Some embodiments of this application relate to the field of battery manufacturing technologies and particularly disclose a battery pack. The battery pack includes: a cover plate, a cell module, a first resin layer, a battery pack housing, and at least one first monitoring member. The cell module is accommodated inside the battery pack housing and fastened by the first resin layer, the cover plate is fastened to the battery pack housing, and the cell module includes a plurality of cells stacked in a first direction. Each cell includes an electrode assembly, a cell housing configured to accommodate the electrode assembly, and a tab electrically connected to the electrode assembly. The cell housing includes a sealing portion, and the tab extends out of the cell housing from the sealing portion in a second direction. One of the at least one first monitoring member is disposed between sealing portions of the adjacent cells. The first monitoring member is connected to the cell module, and the first monitoring member is configured to monitor temperature of the tab of the cell. In this way, a risk of thermal run away of a battery pack during charging and discharging can be reduced in some embodiments of this application.

## Description

### CROSS-REFERENCE TO RELATED APPLICATIONS

This application is a continuation application of International Application No. PCT/CN2022/082506, filed on March. 23, 2022, which claims the benefit of priority of Chinese patent application 202120604362.7, filed on March. 24, 2021, the contents of which are incorporated herein by reference in its entirety.

### TECHNICAL FIELD

This application relates to the field of battery manufacturing technologies, and in particular, to a battery pack and an electric device.

### BACKGROUND

At present, a common battery used in the market includes a single cell, but the single cell has a limited amount of power. To increase the power, a plurality of cells are usually combined to form a new battery pack, and the new battery pack can effectively address the issue of low battery power.

However, in a process of implementing this application, the inventors of this application have found that the cell of the existing battery pack is liable to become hot during long-term charging and discharging, and too high temperature of the cell may cause thermal runaway of the battery pack and other safety accidents, thus affecting the use of the battery pack.

### SUMMARY

In view of the foregoing problem, some embodiments of this application provide a battery pack and an electric device, to resolve the problem that high temperature rise of a cell of a battery during long-term charging and discharging is likely to cause thermal runaway of a battery pack.

According to one aspect of this application, a battery pack is including: a cover plate, a cell module, a first resin layer, a battery pack housing, a first monitoring member, and a first limiting member. The cell module is accommodated inside the battery pack housing and fastened by the first resin layer to the battery pack housing, the cover plate is fastened to the battery pack housing, and the cell module includes a plurality of cells stacked in a first direction. Each cell includes an electrode assembly, a cell housing configured to accommodate the electrode assembly, and a tab electrically connected to the electrode assembly, where the cell housing includes a sealing portion, and the tab extends out of the cell housing from the sealing portion in a second direction. One of the at least one first monitoring member is disposed between sealing portions of the adjacent cells, the first monitoring member is connected to the cell module, and the first monitoring member is configured to monitor a temperature of the tab of the cell. The first limiting member is disposed between the sealing portions of the cells, a limiting member is provided with a limiting hole, and the first monitoring member is disposed inside the limiting hole. The first limiting member is configured to limit the first monitoring member between the sealing portions of the cells, and the first monitoring member is configured to monitor temperature rise of the tab, which can not only monitor the temperature rise of the cell but also reduce a risk of breakage of the surface of the cell and electrolyte leakage caused by the first monitoring member being squeezed due to swelling of the cell.

In an optional implementation, the cell module includes an adapting assembly, where the adapting assembly includes an adapting plate, the adapting plate is disposed at an end of the each cell close to the tab, and the adapting plate is provided with at least one first through hole; and when viewed in a direction opposite to the second direction, one of the at least one first through hole at least partially overlaps the limiting hole, and an end of one of the first monitoring member far away from the limiting hole extends out of the first through hole and is connected to the adapting plate. The first through hole of the adapting plate at least partially overlaps the limiting hole, so that the first monitoring member extends out of the first through hole and is electrically connected to the adapting plate.

In an optional implementation, the adapting assembly includes an adapting member, where the adapting member is disposed on the adapting plate, and the adapting member includes a first adapting member and a second adapting member, the first adapting member connected to one tab one the cell, and the second adapting member connected to another tab of another cell.

In an optional implementation, the battery pack includes a first insulating member, where the first insulating member is disposed between the second adapting member and the adapting plate and provides insulation to reduce contact between the second adapting member and the tab of the cell connected to the adapting plate.

In an optional implementation, the cell includes a first cell and a second cell disposed adjacent to each other, where the first cell includes a first cell housing and a first tab, the first tab extending out of the first cell housing in the second direction, and the second cell includes a second cell housing and a second tab, the second tab extending out of the second cell housing in the second direction; the adapting assembly includes a conductive sheet, the conductive sheet is disposed on a surface of the adapting plate facing away from the cell; and the adapting plate is provided with a second through hole and a third through hole, the second through hole and the third through hole are located on two sides of the conductive sheet, the first tab extends through the second through hole and is connected to a surface of the conductive sheet facing away from the adapting plate, and the second tab extends through the third through hole and is connected to a surface of the first tab facing away from the conductive sheet. Such arrangement can implement an electric connection between the adjacent cells and the adapting plate.

In an optional implementation, the adapting plate is provided with a heat dissipation hole, where the heat dissipation hole is used to dissipate heat of the adapting plate.

In an optional implementation, the battery pack includes a second insulating member, where one side of the second insulating member is disposed on a surface of the cell, the surface of the cell being a surface towards the cover plate; the battery pack further includes a second monitoring member, where the second monitoring member is disposed on one side of the cover plate, the one side of the cover plate being a side towards the cells, and the second monitoring member includes a first monitoring portion, a second monitoring portion, and a guide plate, one side of the first monitoring portion is fastened to the cover plate, another side of the first monitoring portion is connected to one side of the guide plate, another side of the guide plate is connected to one side of the second monitoring portion, and another side of the second monitoring portion is attached to another side of the second insulating member. The second insulating member provides insulation to reduce direct contact between the second monitoring member and the surface of the cell, so as to reduce a risk of power leakage of the cell.

In an optional implementation, the second monitoring member further includes a bonding region, where the bonding region is configured to connect the first monitoring portion and the second monitoring portion, a gap is formed between the first monitoring portion and the second monitoring portion.

In an optional implementation, the battery pack includes a circuit board, where the circuit board is disposed on a surface of the cover plate facing away from the cell module; the cover plate is provided with a fourth through hole; and the guide plate is provided with a connection end, where the connection end extends through the fourth through hole and out of the cover plate and is connected to the circuit board. The circuit board is configured to receive collision information of the cell transferred by the second monitoring member and respond in a timely manner, so as to guarantee safety of the cell.

According to another aspect of this application, an electric device is provided, where electric device includes the foregoing battery pack.

Beneficial effects of some embodiments of this application are as follows: As compared with the prior art, in some embodiments of this application, the cover plate, the cell module, the first resin layer, the battery pack housing, the at least one first monitoring member, and the first limiting member are provided, where the cell module is accommodated inside the battery pack housing and fastened by the first resin layer, the cover plate is fastened to the battery pack housing, the cell module includes the plurality of cells stacked in the first direction, each cell includes the electrode assembly, the cell housing configured to accommodate the electrode assembly, and the tab electrically connected to the electrode assembly, and the cell housing includes the sealing portion. The tab extends out of the cell housing from the sealing portion in a second direction. In addition, one of the at least one first monitoring member is disposed between sealing portions of the adjacent cells, the first monitoring member is connected to the cell module, and the first monitoring member is configured to monitor temperature of the tab of the cell. The first limiting member is disposed between the sealing portions of the cells and configured to fasten the first monitoring member. In such arrangement, the tab is connected to the inside of the cell, so that temperature rise of the tab is close to temperature rise inside the cell; and the first limiting member is configured to limit the first monitoring member between the sealing portions of the cells, and the first monitoring member is configured to monitor the temperature rise of the tab. This can monitor the temperature rise of the cell in a timely manner and reduce the risk of thermal runaway of the battery pack during charging and discharging.

### BRIEF DESCRIPTION OF THE DRAWINGS

To describe the technical solutions in specific some embodiments of this application or in the prior art more clearly, the following briefly describes the accompanying drawings required for describing the specific some embodiments or the prior art. In all drawings, similar components or parts are generally marked by similar reference signs. In the accompanying drawings, the components or parts are not necessarily drawn to the actual scale.
FIG. 1 is a schematic assembly diagram of an overall structure of a battery pack according to an embodiment of this application;
FIG. 2 is a schematic exploded view of an overall structure of a battery pack according to an embodiment of this application;
FIG. 3 is a schematic exploded view of a partial structure of a battery pack according to an embodiment of this application;
FIG. 4 is a schematic diagram of an internal structure of a single cell of a battery pack according to an embodiment of this application;
FIG. 5 is a schematic lateral view of a single cell of a battery pack according to an embodiment of this application;
FIG. 6 is a schematic structural diagram of an adapting plate of a battery pack according to an embodiment of this application;
FIG. 7 is another schematic exploded view of a partial structure of a battery pack according to an embodiment of this application;
FIG. 8 is a lateral view of a tab deflecting relative to an adapting plate of a battery pack according to an embodiment of this application;
FIG. 9 is a schematic enlarged view of a structure of part A in FIG. 8;
FIG. 10 is a schematic diagram of an internal structure of a first cell of a battery pack according to an embodiment of this application;
FIG. 11 is a schematic diagram of an internal structure of a second cell of a battery pack according to an embodiment of this application;
FIG. 12 is a cross-sectional view of a partial structure of a battery pack according to an embodiment of this application;
FIG. 13 is a schematic enlarged view of a structure of part B in FIG. 13;
FIG. 14 is a schematic structural diagram of a first limiting member of a battery pack according to an embodiment of this application;
FIG. 15 is a schematic exploded view of a partial structure of a battery pack from another perspective according to an embodiment of this application;
FIG. 16 is a schematic exploded view of an overall structure of a second monitoring member of a battery pack according to an embodiment of this application;
FIG. 17 is a schematic structural diagram of a cover plate of a battery pack according to an embodiment of this application;
FIG. 18 is a schematic structural diagram of a cover plate of a battery pack from another perspective according to an embodiment of this application; and
FIG. 19 is a schematic structural diagram of a battery pack housing of a battery pack according to an embodiment of this application.

Description of drawings: 10. cover plate; 101. fourth through hole; 102. fifth through hole; 103. sixth through hole; 104. recess; 20. cell module; 21. cell; 21'. first cell; 211'. first cell housing; 212'. first tab; 21". second cell; 211". second cell housing; 212". second tab; 211. electrode assembly; 212. cell housing; 2121. sealing portion; 2121a. first sealing portion; 2121b. second sealing portion; 2122. accommodating portion; 213. tab; 22. adapting assembly; 221. adapting plate; 2211. heat dissipation hole; 2212. first through hole; 2213. second through hole; 2214. third through hole; 222. adapting member; 2221. first adapting member; 2221a. first connecting portion; 2222. second adapting member; 2222b. second connecting portion; 223. conductive sheet; 224. first insulating member; 30. first resin layer; 40. battery pack housing; 40a. accommodating space; 401. side wall; 402. bottom wall; 50. at least one first monitoring member; 501. detecting portion; 502. connecting portion; 60. first limiting member; 61. limiting hole; 70. second insulating member; 70a. first surface; 80. second monitoring member; 801. first monitoring portion; 802. second monitoring portion; 803. guide plate; 8031. connection end; 90. circuit board; 100. third insulating member; 110. second limiting member; 120. third limiting member; 130. first cushion; and 140. second cushion.

### DETAIL ED DESCRIPTION OF EMBODIMENTS

For ease of understanding of this application, the following describes this application in more detail with reference to the accompanying drawings and specific some embodiments. It should be noted that when an element is referred to as being "fastened to" another element, it may be directly fastened to the another element, or there may be one or more elements in between. When an element is referred to as being "connected to" another element, it may be directly connected to the another element, or there may be one or more element in between. The terms such as "vertical", "horizontal", "left", "right", and similar expressions used in this specification are for illustration only.

Unless otherwise defined, all technical and scientific terms used in this specification shall have the same meanings as commonly understood by those skilled in the art to which this application belongs. The terms used in this specification of this application are intended to merely describe the specific some embodiments rather than to limit this application. The term "and/or" used in this specification includes any and all combinations of one or more associated items that are listed.

For better illustration of a structure of a battery pack, the following describes the structure of the battery pack with reference to a coordinate axis X, a coordinate axis Y, and a coordinate axis Z, where the coordinate axis X, the coordinate axis Y, and the coordinate axis Z are perpendicular to each other. A first direction is a positive direction of an axis Z, a second direction is a positive direction of an axis X, and a third direction is a positive direction of an axis Y.

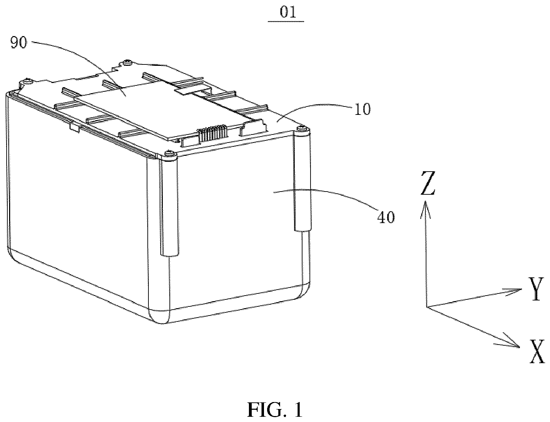

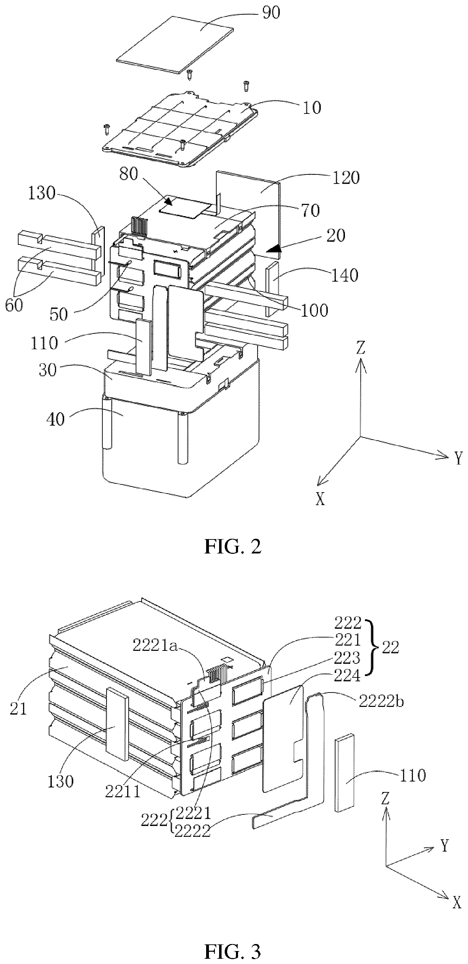

Referring to FIG. 1 and FIG. 2, the battery pack 01 includes: a cover plate 10, a cell module 20, a first resin layer 30, a battery pack housing 40, at least one first monitoring member 50, and a first limiting member 60. The cell module 20 is accommodated inside the battery pack housing 40 and fastened by the first resin layer 30. The cover plate 10 is fastened to the battery pack housing 40. One of the at least one first monitoring member 50 is disposed between sealing portions 2121 of adjacent cells 21. The first limiting member 60 is disposed between the sealing portions 2121 of the cells 21, and the first limiting member 60 is configured to limit the first monitoring member 50. The first monitoring member 50 is configured to monitor temperature rise of the cell 21.

The battery pack 01 further includes a second insulating member 70, a second monitoring member 80, a circuit board 90, a third insulating member 100, a second limiting member 110, a third limiting member 120, a first cushion 130, and a second cushion 140. The second insulating member 70 is disposed on a surface of the cell 21, the surface of the cell 21 being a surface towards the cover plate 10; 10, the second monitoring member 80 is disposed on a side of the cover plate 10 close to the cell 21 and configured to monitor swelling of the cell 21, and the third insulating member 100 is disposed between the adjacent cells 21. In addition, the circuit board 90 is disposed on a surface of the cover plate 10 facing away from the cell module 20, the second monitoring member 80 is electrically connected to the circuit board 90 to transfer swelling condition of the cell 21 to the circuit board 90, and the circuit board 90 responds in a timely manner, so as to guarantee the safety of the cell 21.

For better description of the structure of the battery pack 01, the following describes the structure of the battery pack 01 with reference to a coordinate axis X, a coordinate axis Y, and a coordinate axis Z, where the coordinate axis X, the coordinate axis Y, and the coordinate axis Z are perpendicular to each other.

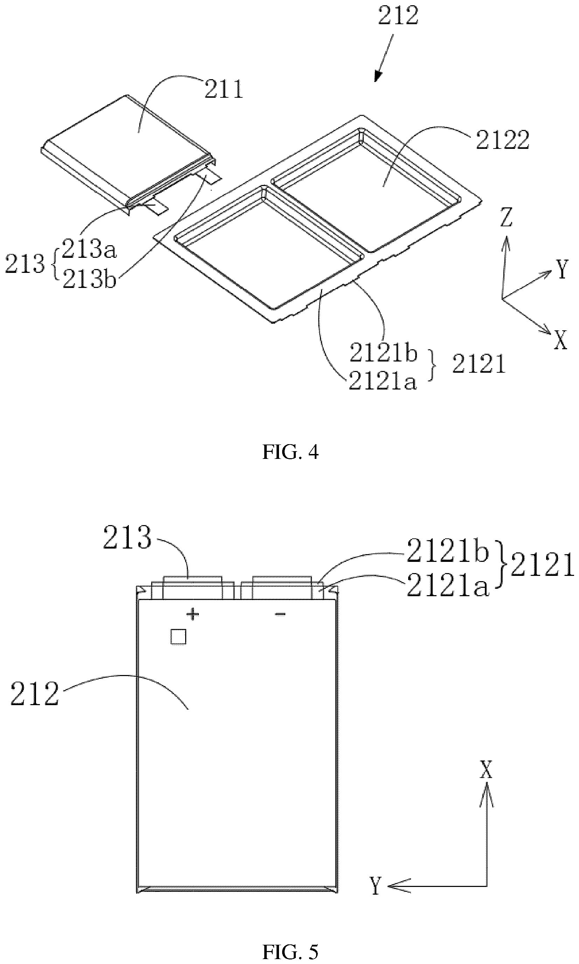

For the foregoing cell module 20, as shown in FIG. 3 to FIG. 5, the cell module 20 includes a plurality of cells 21 stacked in a first direction Z. Preferably, the first direction is a direction Z in this embodiment, and the plurality of cells 21 are stacked in the direction Z. Each cell 21 includes an electrode assembly 211, a cell housing 212 configured to accommodate the electrode assembly 211, and a tab 213 electrically connected to the electrode assembly 211. The cell housing 212 includes a sealing portion 2121, and the tab 213 extends out of the cell housing 212 from the sealing portion 2121 in a second direction X. The sealing portion 2121 is configured to seal the electrode assembly 211 accommodated inside the cell housing 212, so as to prevent external moisture from entering the space inside the cell housing 212. Preferably, the tab 213 includes a positive tab 213a and a negative tab 213b. The positive tabs 213a and the negative tabs 213b of the plurality of cells 21 are connected.

In some embodiments, the sealing portion 2121 includes a first sealing portion 2121a and a second sealing portion 2121b, where the second sealing portion 2121b extends from an end of the first sealing portion 2121a facing away from the cell housing 212, a length of the first sealing portion 2121a in a third direction Y is greater than that of the second sealing portion 2121b in the third direction Y, and the third direction Y is perpendicular to both the first direction Z and the second direction X.

It should be noted that after the electrode assembly 211 is disposed inside the cell housing 212, the sealing portion 2121 of the cell housing 212 is bonded and fastened to seal the electrode assembly 211 inside the cell housing 212, where the first sealing portion 2121a and the second sealing portion 2121b form a top seal of the cell 21. In addition, one end of the tab 213 of the cell 21 is connected to the electrode assembly 211, and another end of the tab 213 extends out of the sealing portion 2121 in the second direction X.

In some embodiments, the cell housing 212 includes an accommodating portion 2122, where the accommodating portion 2122 is connected to the first sealing portion 2121a, and the accommodating portion 2122 is configured to accommodate the electrode assembly 211.

It should be noted that the first direction refers to a Z-axis direction. Preferably, the first direction Z is a thickness direction of the cell 21. The second direction refers to an X-axis direction. The third direction refers to a Y-axis direction.

In some embodiments, the cell module 20 includes an adapting assembly 22, where the adapting assembly 22 includes an adapting plate 221, an adapting member 222, and a conductive sheet 223. The adapting plate 221 is disposed on an end of the cell 21 close to the tab 213, the adapting member 222 is disposed on the adapting plate 221, and the conductive sheet 223 is disposed on a surface of the adapting plate 221 facing away from the cell 21. The conductive sheet 223 is configured to connect the cell 21, so as to electrically connect the adapting plate 221 to the cell 21.

In some embodiments, the adapting plate 221 is a PCB circuit board, where the PCB may be used as a carrier for electronics, facilitating connection between internal components of the battery pack.

In some embodiments, the adapting plate 221 is provided with a heat dissipation hole 2211, where the heat dissipation hole 2211 may be used to dissipate heat of the adapting plate 221, so as to prevent the adapting plate 221 from being damaged due to excessive temperature rise.

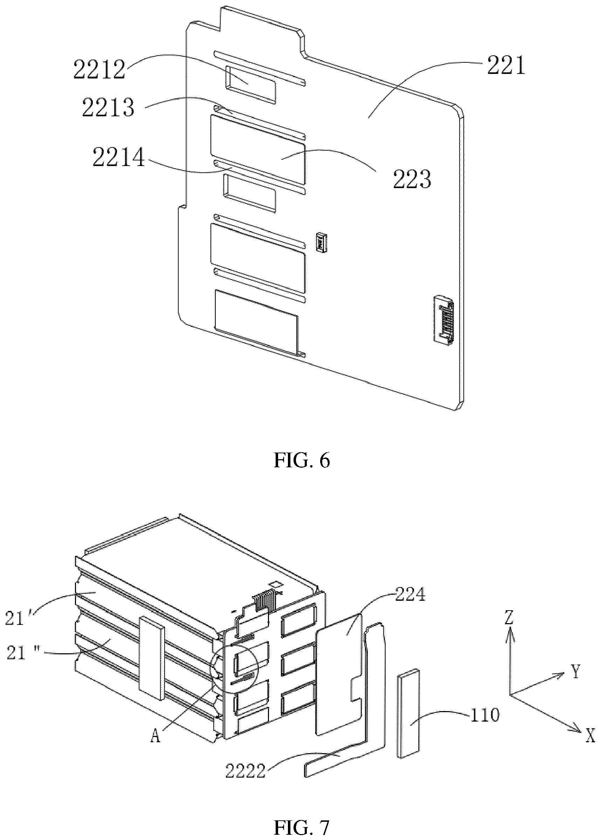

In some embodiments, as shown in FIG. 3 and FIG. 6, the adapting plate 221 is provided with at least one first through hole 2212, where the first through hole 2212 helps the first monitoring member 50 extend through the adapting plate 221 and then be electrically connected to the adapting plate 221.

In some embodiments, the adapting plate 221 is provided with a second through hole 2213 and a third through hole 2214, where the second through hole 2213 and the third through hole 2214 are located on two sides of the conductive sheet 223 and help the tab 213 of the cell 21 extend through and be connected to the adapting plate 221. In the first direction Z, the second through hole 2213 is 0.6 mm-1.2 mm in width, the third through hole 2214 is 0.6 mm-1.2 mm in width. In the third direction Y, lengths of the second through hole 2213 and the third through hole 2214 are provided based on an actual width of the tab 213 extending through the second through hole 2213 and the third through hole 2214. Preferably, in the third direction Y, the lengths of the second through hole 2213 is greater than 1 mm, the third through hole 2214 is greater than 1 mm. In addition, when the tab 213 of the cell 21 extends through the second through hole 2213 and the third through hole 2214, a deflecting angle & of the tab 213 with respect to the second direction X in the second through hole 2213 and the third through hole 2214 is less than 30 degrees. Such arrangement can reduce a risk of electrolyte leakage of the cell 21 caused by pulling of the sealing portion 2121 of the cell 21.

In some embodiments, the adapting member 222 includes a first adapting member 2221 and a second adapting member 2222, where the first adapting member 2221 is connected to one tab 213 of the cell 21, and the second adapting member 2222 is connected to another tab 213 of the cell 21. Preferably, the adapting member 222 includes copper bars. Further, the first adapting member 2221 may be a general positive copper bar, and the second adapting member 2222 may be a general negative copper bar. It can be understood that the first adapting member 2221 is not limited to the general positive copper bar, and the second adapting member 2222 is not limited to the general negative copper bar. Preferably, the first adapting member 2221 and the second adapting member 2222 have opposite electric polarities. Preferably, the adapting members 222 may alternatively include a plurality of first adapting members 2221 and second adapting members 2222. The plurality of cells 21 may be connected in series or parallel. The plurality of first adapting members 2221 may be connected to positive tabs or negative tabs of the cells 21. The plurality of second adapting members 2222 may be connected to the negative tabs or the positive tabs of the cells 21.

Polarities of the tabs 213 of the cell 21 to which the first adapting member 2221 and the second adapting member 2222 are connected are not limited. In addition, the first adapting member 2221 may be connected to the positive tab 213 of the cell 21, and the second adapting member 2222 is connected to the negative tab 213 of the cell 21. The polarities of the tabs 213 to which the first adapting member 2221 and the second adapting member 2222 are connected are not limited, provided that the first adapting member 2221 and the second adapting member 2222 are connected to the tabs 213 having opposite polarities.

In some embodiments, the first adapting member 2221 includes a first connecting portion 2221a, and the second adapting member 2222 includes a second connecting portion 2222b, and the first connecting portion 2221a and the second connecting portion 2222b extends out of the adapting plate 221 in the first direction Z, that is, in the Z-axis direction. The first connecting portion 2221a and the second connecting portion 2222b may are configured to connect to an external component. For example, the external component may be a safety apparatus which can disconnect a circuit to effectively protect the internal circuit of a battery when internal current of the battery exceeds a specified value. In some embodiments, the safety apparatus is a fuse which can disconnect the circuit to effectively protect the internal circuit of the battery when internal current of the battery exceeds the specified value.

In some embodiments, the adapting assembly 22 further includes a first insulating member 224, where the first insulating member 224 is disposed between the second adapting member 2222 and the adapting plate 221. The first insulating member 224 provides insulation to prevent the second adapting member 2222 from coming into contact with the tab 213 of the cell 21 on the adapting plate 221. It can be understood that the first insulating member 224 may be but is not limited to an epoxy plate and may alternatively be another material, for example, a rubber pad.

Two adjacent cells 21 are used as an example for description below.

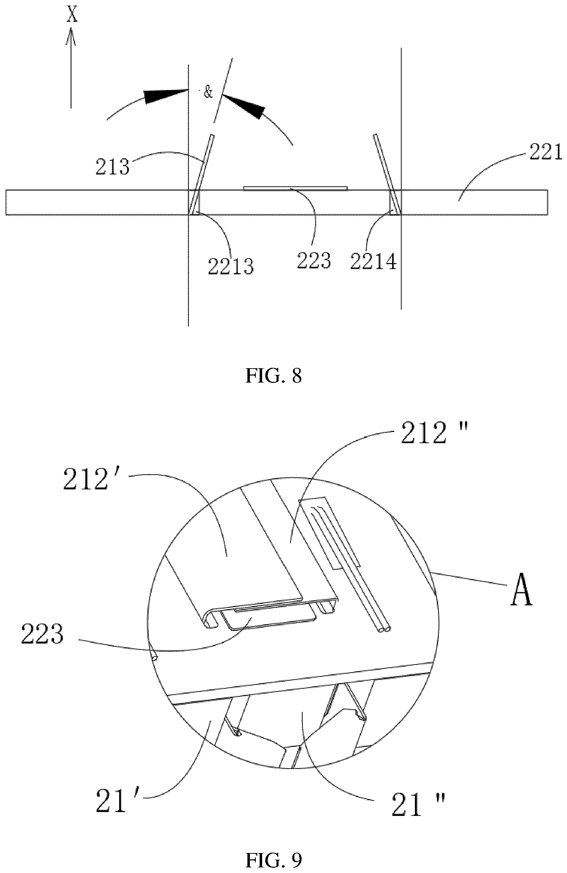

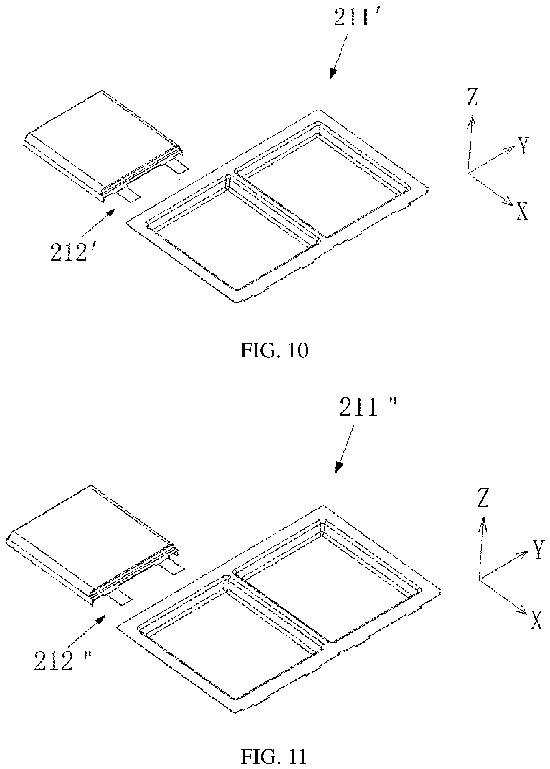

As shown in FIG. 7 to FIG. 11, the cells 21 disposed adjacent to each other are separately referred to as a first cell 21' and a second cell 21". A cell housing and a tab 213 of the first cell 21' are referred to as a first cell housing 211' and a first tab 212', respectively, and the first tab 212' extends out of the first cell housing 211' in the second direction X. A cell housing and a tab of the second cell 21" are referred to as a second cell housing 211" and a second tab 212", respectively, and the second tab 212" extends out of the second cell housing 211" in the second direction X. The first cell 21' includes the first cell housing 211' and the first tab 212'. The second cell 21" includes the second cell housing 211" and the second tab 212". An end of the first tab 212' extending out of the first cell housing 211' extends through the second through hole 2213 and is connected to a surface of the conductive sheet 223 facing away from the adapting plate 221. An end of the second tab 212" extending out of the second cell housing 211" extends through the third through hole 2214 and is connected to a surface of the first tab 212' facing away from the conductive sheet 223. The first tab 212' and the second tab 212" are connected to the conductive sheet 223 mounted on the adapting plate 221, so as to electrically connect the adjacent cells 21 to the adapting plate 221. It can be understood that the first tab 212' and the second tab 212" have opposite polarities, the first tab 212' is a positive tab or a negative tab, and the second tab 212" is a negative tab or a positive tab.

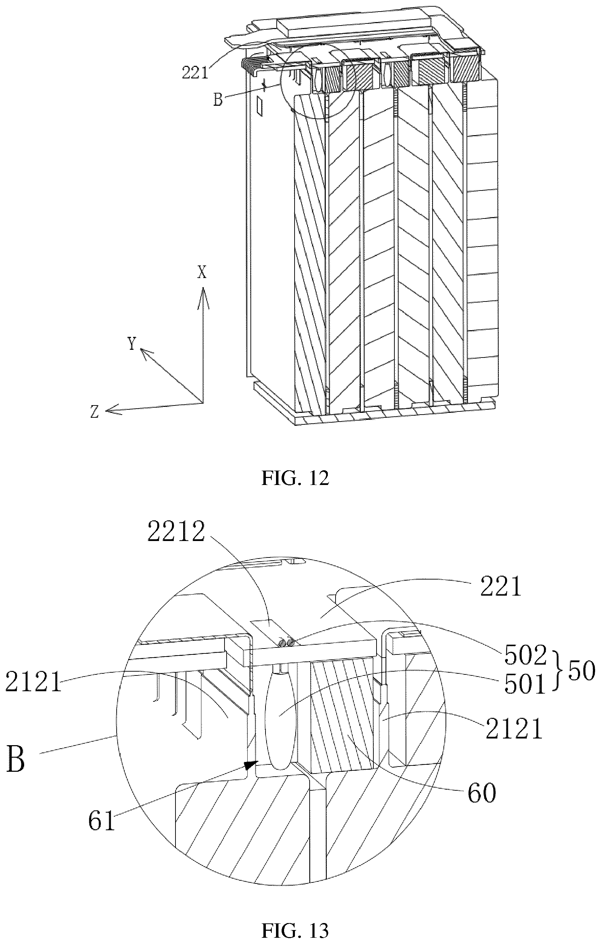

For the foregoing at least one first monitoring member 50, as shown in FIG. 12 and FIG. 13, one of the at least one first monitoring member 50 is disposed between the sealing portions 2121 of the adjacent cells 21, where the first monitoring member 50 is electrically connected to the adapting plate 221 of the cell module 20, and the first monitoring member 50 is configured to monitor temperature of the cell 21. Preferably, the first monitoring member 50 is configured to monitor temperature of the tab of the cell 21. Preferably, the first monitoring member 50 includes a detecting portion 501 and a connecting portion 502. The detecting portion 501 is provided with a plurality of sensing elements which may be configured to sense temperature. The connecting portion 502 includes a wire, where the wire is used to electrically connect the detecting portion 501 to other components, so as to implement transmission of electrical signals between the detecting portion 501 and the other components. For example, in this embodiment, the wire electrically connects the detecting portion 501 to the adapting plate 221, so as to implement transmission of electrical signals between the detecting portion 501 and the adapting plate 221.

In some embodiments, the first monitoring member 50 may be a temperature sensor. The temperature sensor is configured to monitor temperature rise of the tab 213 to fulfill a purpose of monitoring temperature rise of the cell 21. Preferably, the temperature sensor may be a thermocouple temperature sensor.

In some embodiments, the first monitoring member 50 is connected to a top seal surface of the cell 21. Preferably, the first monitoring member 50 is in contact and connected with the top seal surface of the cell 21, so that the first monitoring member 50 can detect the temperature of the tab of the cell 21 more accurately.

In some embodiments, the first monitoring member 50 is connected to the sealing portion 2121 of the cell 21. Preferably, the first monitoring member 50 is in contact and connected with the sealing portion 2121 of the cell 21, so that the first monitoring member 50 can monitor the temperature of the tab of the cell 21 more accurately.

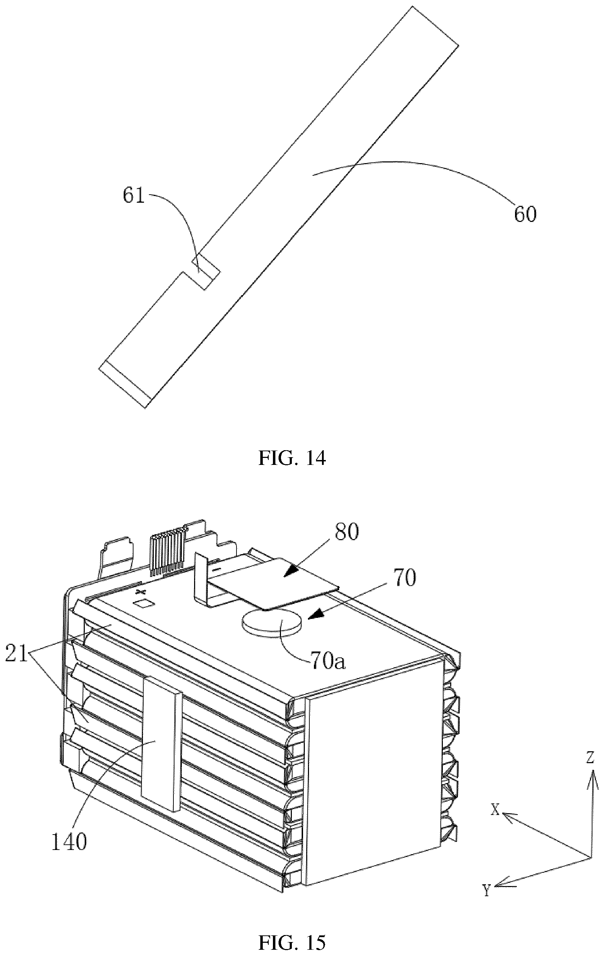

For the first limiting member 60, as shown in FIG. 13 and FIG. 14, the first limiting member 60 is disposed between the sealing portions 2121 of the cell 21, the first limiting member 60 is configured to limit the first monitoring member 50, and the first limiting member 60 is configured to isolate the sealing portions 2121 of the adjacent cells 21, so as to prevent the sealing portions 2121 of the adjacent cells 21 from being in contact and connected with each other.

In some embodiments, the first limiting member 60 includes an insulating structure. Preferably, the first limiting member 60 is foam. Preferably, the foam has a hardness Shore C 50 or more. Preferably, a surface of the first limiting member 60 is provided with an insulating material.

It should be noted that Shore hardness also referred to as Shore hardness is a way to indicate hardness scales of metal, plastics, and rubber materials, and is classified into four types: type A, type B, type C, and type D, where Shore C hardness is one of the four types.

In some embodiments, the first limiting member 60 is provided with a limiting hole 61, and the first monitoring member 50 is disposed inside the limiting hole 61. It can be understood that a shape of the limiting hole 61 is not limited, the limiting hole 61 may be cuboid or cylindrical, and the shape of the limiting hole 61 may be provided based on an actual shape of the first monitoring member 50. Preferably, a diameter of the limiting hole 61 is 1-2 mm greater than a width of the first monitoring member 50 in the third direction Y, which is conducive to placing the first monitoring member 50 to prevent the first monitoring member 50 from moving inside the limiting hole 61.

In some embodiments, when the limiting hole 61 is viewed in a direction opposite to the second direction X, that is, a direction perpendicular to the adapting plate 221 and pointing toward the adapting plate 221, the hole 61 at least partially overlaps one of the at least one first through hole 2212, and an end of one of the at least one first monitoring member 50 far away from the limiting hole 61 extends out of the first through hole 2212 and is connected to the adapting plate 221. The limiting hole 61 at least partially overlaps one of the at least one first through hole 2212. Such arrangement helps the first monitoring member 50 extend out and be electrically connected to the adapting plate 221, and also facilitates heat dissipation of the cell 21.

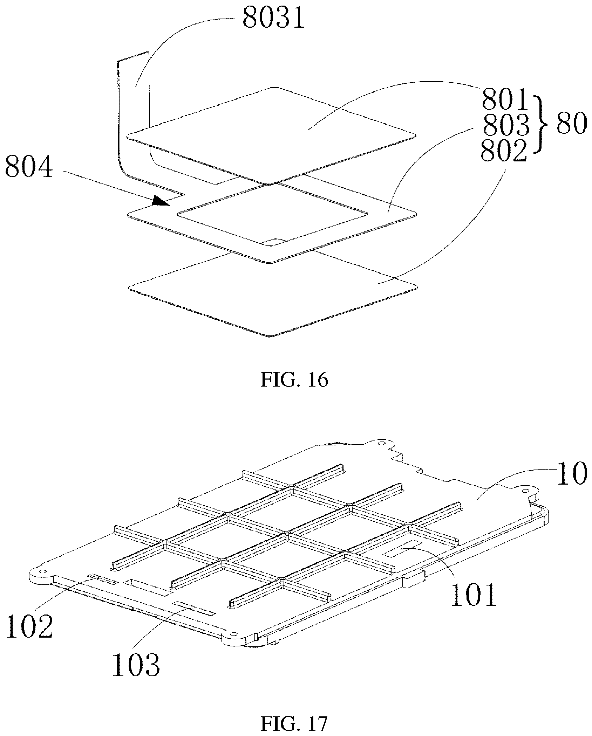

For the second monitoring member 80 and the circuit board 90, as shown in FIG. 1, FIG. 15, and FIG. 16, the second monitoring member 80 is disposed on a side of the cover plate 10 close to the cell 21, the second monitoring member 80 is configured to monitor swelling of the cell 21, the circuit board 90 is disposed on a surface of the cover plate 10 facing away from the cell module 20 and electrically connected to the second monitoring member 80. The circuit board 90 receives swelling information of the cell 21 transferred by the second monitoring member 80 and responds in a timely manner, so as to guarantee the safety of the cell 21.

Specifically, the second monitoring member 80 includes a first monitoring portion 801, a second monitoring portion 802, and a guide plate 803, where one side of the first monitoring portion 801 is fastened to the cover plate 10, another side of the first monitoring portion 801 is connected to one side of the guide plate 803, another side of the guide plate 803 is connected to one side of the second monitoring portion 802, and another side of the second monitoring portion 802 is attached to the second insulating member 70. When the first monitoring portion 801 and the second monitoring portion 802 are connected, information is transmitted via the guide plate 803.

Preferably, the first monitoring portion 801 and the second monitoring portion 802 both are a film sheet and are formed by applying a conductive silver slurry onto the film sheet, where the conductive silver slurry forms a conductive portion of the first monitoring portion 801 and the second monitoring portion 802.

The second monitoring member further includes a bonding region 804.The bonding region 804 is disposed close to an edge of the guide plate 803, the bonding region 804 is formed by applying structures such as glue or a double-sided adhesive tape onto the edge, and the bonding region 804 connects the first monitoring portion 801 and the second monitoring portion 802. The bonding region 804 is coated with glue, so as to form a gap in regions other than the bonding region 804 between the first monitoring portion 801 and the second monitoring portion 802, for example, forming a gap of 0.2 mm. When the cell 21 swells, the cell 21 may push the second monitoring portion 802 to move toward the first monitoring portion 801, and the gap provides a moving space for the second monitoring portion 802 to move toward the first monitoring portion 801. When the conductive portion of the first monitoring portion 801 contacts the conductive portion of the second monitoring portion 802, the first monitoring portion 801 and the second monitoring portion 802 are connected, and then the guide plate 803 transfers relevant information about the swelling of the cell 21.

In some embodiments, the guide plate 803 is provided with a connection end 8031, where the connection end 8031 extends through a fourth through hole 101 in the cover plate 10 and is then connected to the circuit board 90, electrically connecting the second monitoring member 80 to the circuit board 90. Preferably, the connecting portion 8031 extends through the fourth through hole 101 and is then soldered to the circuit board 90, connecting the second monitoring member 80 to the circuit board 90. It can be understood that a method for fastening the connecting portion 8031 and the circuit board 90 is not limited to a soldering method and may alternatively be another fastening method, for example, screwing.

In some embodiments, the circuit board 90 is a battery management system (BMS) board, where the BMS board can be configured to control data such as voltage of the cell 21, and respond to a circuit of the cell 21 in a timely manner after receiving information delivered via the guide plate 803, so as to guarantee the safety of the cell 21.

For the foregoing second insulating member 70, as shown in FIG. 15, one side of the second insulating member 70 is disposed on a surface of the cell 21, the surface of the cell 21being a surface towards the cover plate 10, and another side of the second insulating member 70 is fastened to another side of the second monitoring portion 802. The second insulating member 70 provides insulation to reduce direct contact between the second monitoring member 80 and the surface of the cell 21, so as to reduce a risk of power leakage of the cell 21.

In some embodiments, the second insulating member 70 has a hardness of Shore A 50 or more, facilitating a connection between the second monitoring member 80 and the second insulating member 70.

The second insulating member 70 can insulate the second monitoring member 80 from the cell 21. Preferably, the second insulating member 70 includes a rubber pad. Preferably, the second insulating member 70 includes foam.

In some embodiments, the second insulating member 70 includes an insulating support, where the insulating support is disposed on a surface of the cell 21, the surface of the cell 21 being a surface towards the cover plate 10, and two sides of the insulating support are clamped to two sides of the cell 21. The insulating support can not only insulate the second monitoring member 80 from the cell 21 but also make the cell 21 more secure. Preferably, the insulating support is integrally formed by an injection molding process.

In some embodiments, a first surface 70a of the second insulating member 70 close to the cover plate 10 is connected to the second monitoring member 80. Preferably, the first surface 70a of the second insulating member 70 close to the cover plate 10 is in contact and connected with the second monitoring member 80. Preferably, the first surface 70a of the second insulating member 70 close to the cover plate 10 is incompletely coated with the first resin layer 30. Preferably, the second insulating member 70 is partially coated with the first resin layer 30.

For the first resin layer 30, as shown in FIG. 2, the first resin layer 30 fastens the cell module 20 to the inside of the battery pack housing 40 and is used to cover the cell module 20 together with the battery pack housing 40, so as to protect the cell module 20. The cells 21 are stacked in the first direction Z, a gap is present between sides of the adjacent cells 21, and the first resin layer 30 is filled in the gap between the sides to bond and fasten the adjacent cells 21. Preferably, a side of the cell 21 may alternatively be a peripheral position of an outer contour of the cell 21, so that the first resin layer 30 fastens the cell 21 more securely. The first resin layer 30 is disposed inside the battery pack housing 40 to fill gaps between the battery pack housing 40 and other structural parts.

In some embodiments, an injection method for the first resin layer 30 may be potting or injection molding, for example, low pressure injection molding. In this embodiment, the first resin layer 30 is a potting adhesive. The potting adhesive can bond, seal, and pot components, and provide coating protection for the components. Preferably, the first resin layer 30 is made of an epoxy resin potting adhesive. It can be understood that the first resin layer 30 is not limited to an epoxy resin layer potting adhesive. In some embodiments, the first resin layer 30 may alternatively be replaced with other types of potting adhesives.

In some embodiments, the first resin layer 30 is partially injected into the limiting hole 61. After being cured, the first resin layer 30 can fasten the first monitoring member 50 disposed inside the limiting hole 61 to prevent the first monitoring member 50 from moving inside the limiting hole 61.

In some embodiments, a surface of the cell 21 close to the cover plate 10 is coated with the first resin layer 30. When the plurality of cells 21 swell to some extent, the cells 21 push the first resin layer 30 to move toward the second monitoring member 80, and the first resin layer 30 pushes the second monitoring portion 802 to move toward the first monitoring portion 801. When the conductive portion of the second monitoring portion 802 comes into contact with the conductive portion of the first monitoring portion 801, the first monitoring member 50 forms a conductive loop and is connected to an external structure via the guide plate 803, delivering information indicating that the first monitoring portion 801 and the second monitoring portion 802 are connected.

In some embodiments, the plurality of cells 21 are coated with the first resin layer 30, so that the cells 21 are bonded and fastened.

In some embodiments, the first resin layer 30 is disposed between the second insulating member 70 and the cell 21. When the plurality of cells 21 swell to some extent, the cells 21 push the insulating support to move toward the second monitoring member 80, and the first resin layer 30 pushes the second monitoring portion 802 to move toward the first monitoring portion 801. When the conductive portion of the second monitoring portion 802 comes into contact with the conductive portion of the first monitoring portion 801, the first monitoring member 50 forms a conductive loop and is connected to the external structure through the guide plate 803 delivering the information indicating that the first monitoring portion 801 and the second monitoring portion 802 are connected.

For the third insulating member 100, as shown in FIG. 2, the third insulating member 100 is disposed between the adjacent cells 21. When the cell 21 swells, the third insulating member 100 may be compressed to provide space for the swelling of the cell 21.

In some embodiments, the third insulating member 100 is foam, the foam is disposed between the adjacent cells 21, and when the cell 21 swells, the foam may be compressed to provide space for the swelling of the cell 21.

For the second limiting member 110 and the third limiting member 120, as shown in FIG. 2, the second limiting member 110 is disposed on the second adapting member 2222 and is configured to limit the second adapting member 2222, the third limiting member 120 is disposed at an end of the cell 21 facing away from the tab 213, and the third limiting member 120 is configured to limit the end of the cell 21 facing away from the tab 213.

In some embodiments, the second limiting member 110 and the third limiting member 120 both are limiting foam. It can be understood that the second limiting member 110 and the third limiting member 120 are not limited to the limiting foam and may alternatively be other apparatuses, for example, insulating rubber pads.

For the first cushion 130 and the second cushion 140, as shown in FIG. 2, the first cushion 130 and the second cushion 140 are respectively disposed on two sides of the cell module 20 in the third direction Y. The first cushion 130 and the second cushion 140 provide cushion protection for the cell module 20 in the battery pack, reducing damage caused by direct collision between the cell module 20 and a battery pack housing.

In some embodiments, the first cushion 130 and the second cushion 140 may be cushion foam, but it can be understood that the first cushion 130 and the second cushion 140 are not limited to the cushion foam and may alternatively be other apparatuses, for example, cushion rubber pads.

For the cover plate 10, as shown in FIG. 2, FIG. 17, and FIG. 18, the cover plate 10 is disposed on the battery pack housing 40 in the Z-axis direction, and the cover plate 10 is fastened to the battery pack housing 40. Preferably, the cover plate 10 is substantially rectangular, and the cover plate 10 can prevent external components from being in direct contact with components inside the battery pack housing 40. It can be understood that a method for fastening the cover plate 10 and the battery pack housing 40 may be screwing, but is not limited to fastening by using a screwing method and may alternatively be another fastening method, for example, welding or riveting.

In some embodiments, the cover plate 10 is provided with the fourth through hole 101, the fourth through hole 101 facilitates a connection between the circuit board 90 and the second monitoring member 80, and an end of the second monitoring member 80 extends through the fourth through hole 101 and is then connected to the circuit board 90. It can be understood that a shape of the cover plate 10 is not limited to a rectangle, and for the battery pack 01 of a different shape, the shape of the cover plate 10 may be changed based on a different battery pack. For example, when the battery pack is cylindrical as a whole, the cover plate 10 may be provided in a circular shape.

In some embodiments, the cover plate 10 is provided with a fifth through hole 102 and a sixth through hole 103, where the first connecting portion 2221a and the second connecting portion 2222b extend out of the fifth through hole 102 and the sixth through hole 103 and are externally connected to other components.

In some embodiments, a side of the cover plate 10 close to the cell module is provided with a recess 104, where the recess 104 is configured to receive the second monitoring member 80. In some embodiments, the side of the cover plate 10 close to the cell module is of a flat plate structure. The second monitoring member 80 is disposed on the cover plate 10 by bonding or the like.

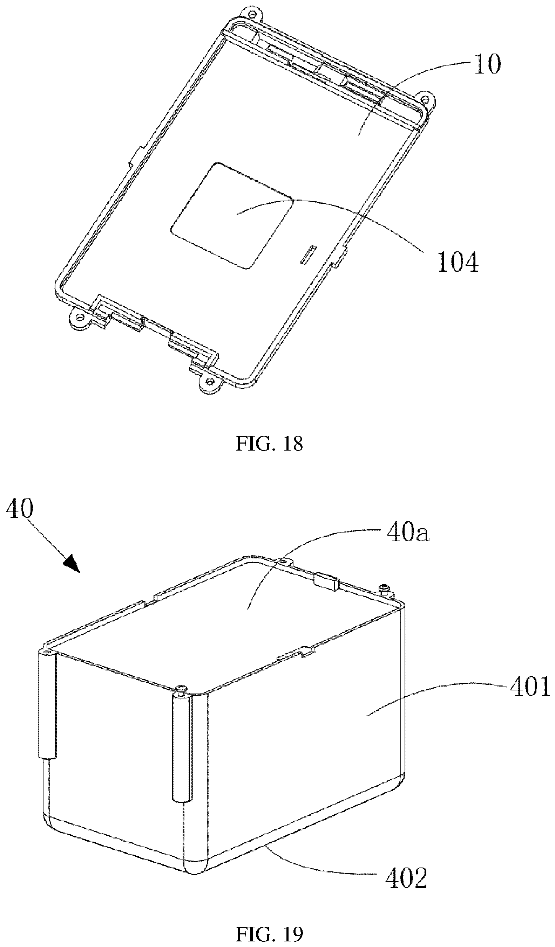

For the battery pack housing 40, as shown in FIG. 2 and FIG. 19, the battery pack housing 40 is of a cuboid structure, and the battery pack housing 40 is provided with an accommodating space 40a and an opening communicating with the accommodating space 40a. The battery pack housing 40 includes four side walls 401 and a bottom wall 402, where the four side walls 401 and the bottom wall 402 enclose the accommodating space 40a. The cell module 20 is disposed inside the accommodating space 40a, and the cover plate 10 covers the opening to enclose the cell module 20 inside the battery pack housing 40.

It can be understood that the shape of the battery pack housing 40 is not limited thereto and may alternatively be of other structures. For example, when the cell module 20 is circular, the battery pack housing 40 is cylindrical. The shape of the battery pack housing 40 may be changed based on the shape of the cell module 20.

In some embodiments, the method for fastening the battery pack housing 40 and the cover plate 10 may be a snap fastening method. It can be understood that the method for fastening the battery pack housing 40 and the cover plate 10 is not limited thereto and may alternatively be another method, for example, bonding and fastening the two by using an adhesive.

In some embodiments of this application, the cover plate 10, the cell module 20, the first resin layer 30, the battery pack housing 40, the at least one first monitoring member 50, and the first limiting member 60 are provided. The cell module 20 is accommodated inside the battery pack housing 40, and the cell module 20 fastened by the first resin layer 30. The cover plate 10 is fastened to the battery pack housing 40, the cell module 20 includes the plurality of cells 21 stacked in the first direction Z. Each cell 21 includes the electrode assembly 211, the cell housing configured to accommodate the electrode assembly 211, and the tab 213 electrically connected to the electrode assembly 211, and the cell housing includes the sealing portion 2121. The tab 213 extends out of the cell housing from the sealing portion 2121 in the second direction X. In addition, one of the at least one first monitoring member 50 is disposed between the sealing portions 2121 of the adjacent cells 21, the first monitoring member 50 is connected to the cell module 20 and configured to monitor the temperature of the tab 213 of the cell 21. The first limiting member 60 is disposed between the sealing portions 2121 of the cells 21 and configured to fasten the first monitoring member 50. In such arrangement, the tab 213 is connected to the inside of the cell 21, so that temperature rise of the tab 213 is close to temperature rise inside the cell 21; and the first limiting member 60 is configured to limit the first monitoring member 50 between the sealing portions 2121 of the cells 21, and the first monitoring member 50 is configured to monitor the temperature rise of the tab 213. This can monitor the temperature rise of the cell in a timely manner and reduce the risk of thermal runaway of the battery pack during charging and discharging.

An embodiment of this application further provides an electric device. The electric device includes the foregoing battery pack. The electric device includes but is not limited to a two-wheeled electric vehicle, an energy storage device, and a handheld electric tool. A function and structure of the battery pack may refer to the foregoing some embodiments. Details are not repeated herein.

The foregoing descriptions are merely some embodiments of this application, but are not intended to limit the patent scope of this application. Any equivalent structural transformations or equivalent process transformations made by using the content of the specification and drawings or direct or indirect application of the content of the specification and drawings to other related technical fields should fall within the patent protection scope of this application.

## Claims

1. A battery pack, comprising: a cover plate, a cell module, a first resin layer, and a battery pack housing; wherein the cell module is accommodated inside the battery pack housing and fastened by the first resin layer to the battery pack housing, the cover plate is fastened to the battery pack housing;
the cell module comprises a plurality of cells stacked in a first direction; each cell comprises an electrode assembly, a cell housing configured to accommodate the electrode assembly, and a tab electrically connected to the electrode assembly; the cell housing comprises a sealing portion, and the tab extends out of the cell housing from the sealing portion in a second direction;
a first monitoring member is disposed between sealing portions of the adjacent cells, the first monitoring member is connected to the cell module and is configured to monitor a temperature of the tab of the cell; and
a first limiting member is disposed between the sealing portions of the adjacent cells, and the first limiting member is configured to limit the first monitoring member.

2. The battery pack according to claim 1, wherein the first limiting member is provided with a limiting hole, the first monitoring member is disposed inside the limiting hole.

3. The battery pack according to claim 2, wherein the cell module comprises an adapting assembly, wherein the adapting assembly comprises an adapting plate, the adapting plate is disposed at an end of the each cell close to the tab, and the adapting plate is provided with at least one first through hole; when viewed in a direction opposite to the second direction, one of the at least one first through hole at least partially overlaps the limiting hole, and an end of the first monitoring member far away from the limiting hole extends out of the first through hole, the first monitoring member is connected to the adapting plate.

4. The battery pack according to claim 3, wherein the adapting assembly comprises an adapting member, the adapting member is disposed on the adapting plate, and the adapting member comprises a first adapting member and a second adapting member;
the first adapting member being connected to one tab of one cell, and the second adapting member being connected to another tab of another cell.

5. The battery pack according to claim 4, wherein the adapting assembly comprises a first insulating member, the first insulating member disposed between the second adapting member and the adapting plate.

6. The battery pack according to claim 3, wherein the cells comprise a first cell and a second cell disposed adjacent to each other, the first cell comprises a first cell housing and a first tab, the first tab extending out of the first cell housing in the second direction, and the second cell comprises a second cell housing and a second tab, the second tab extending out of the second cell housing in the second direction;
the adapting assembly comprises a conductive sheet, the conductive sheet is disposed on a surface of the adapting plate facing away from the cell; and
the adapting plate is provided with a second through hole and a third through hole, the second through hole and the third through hole are located on two sides of the conductive sheet, the first tab extends through the second through hole and is connected to a surface of the conductive sheet facing away from the adapting plate, and the second tab extends through the third through hole and is connected to a surface of the first tab facing away from the conductive sheet.

7. The battery pack according to claim 3, wherein the adapting plate provided with a heat dissipation hole.

8. The battery pack according to claim 1, comprising a second insulating member and a second monitoring member, one side of the second insulating member is disposed on a surface of the cell, the surface of the cell being a surface towards the cover plate; the second monitoring member is disposed on one side of the cover plate, the one side of the cover plate being a side towards the cells; and
the second monitoring member comprises a first monitoring portion, a second monitoring portion, and a guide plate one side of the first monitoring portion is fastened to the cover plate, another side of the first monitoring portion is connected to one side of the guide plate, another side of the guide plate is connected to one side of the second monitoring portion, and another side of the second monitoring portion is attached to another side of the second insulating member.

9. The battery pack according to claim 8, wherein the second monitoring member further comprises a bonding region, wherein the bonding region is configured to connect the first monitoring portion and the second monitoring portion, a gap is formed between the first monitoring portion and the second monitoring portion.

10. The battery pack according to claim 8, the battery pack comprise a circuit board, wherein the circuit board is disposed on a surface of the cover plate facing away from the cell module;
the cover plate is provided with a fourth through hole; and
the guide plate is provided with a connection end, wherein the connection end extends through the fourth through hole and out of the cover plate and is connected to the circuit board.

11. An electric device, comprising the battery pack according to any one of claims 1 to 10.
